(19) Europäisches Patentamt
European Patent Office
Office européen des brevets

(11) Veröffentlichungsnummer: **0 419 794 A1**

(12) **EUROPÄISCHE PATENTANMELDUNG**

(21) Anmeldenummer: **90114244.8**

(22) Anmeldetag: **25.07.90**

(51) Int. Cl.5: **C08L 27/06**, C08K 5/3415, C08K 5/3432, C08K 5/09, C08L 77/12, //(C08L27/06,77:12, 79:02),(C08L27/06,79:02)

(30) Priorität: **26.09.89 DE 3932048**

(43) Veröffentlichungstag der Anmeldung: **03.04.91 Patentblatt 91/14**

(84) Benannte Vertragsstaaten: **BE DE ES FR GB IT NL SE**

(71) Anmelder: **HÜLS AKTIENGESELLSCHAFT**
**Patentabteilung / PB 15 - Postfach 13 20**
**W-4370 Marl 1(DE)**

(72) Erfinder: **Hildebrand, Thomas, Dr.**
**Konradstrasse 28**
**W-4600 Dortmund 70(DE)**

(54) **Costabilisatoren für Formmassen auf Basis von Polymerisaten des Vinylchlorids.**

(57)
1. Stabilisatormischungen, Verwendung derselben und damit stabilisierte Formmassen und Formkörper.
2.1 Für die bisher bekannten physiologisch einwandfreien Stabilisatorsysteme für thermoplastische Formmassen, vorzugsweise auf der Basis von Polymerisaten des Vinylchlorids, mit Polyoxazolinen als Primärstabilisatoren existieren zur Zeit noch keine gut wirksamen Costabilisatoren.
2.2 Die erfindungsgemäßen Costabilisatoren aus Pyrrolen und/oder Dihydropyridinen und/oder Copolymerisaten aus Oxazolinen und Bisoxazolen und/oder Polyolen werden neben physiologisch einwandfreien Primärstabilisatoren, wie Polyoxazolinen und Zinkverbindungen, erfolgreich eingesetzt.
2.3 Stabilisiert werden vorzugsweise Hart- und Weich-Polyvinylchlorid.

EP 0 419 794 A1

# COSTABILISATOREN FÜR FORMMASSEN AUF BASIS VON POLYMERISATEN DES VINYLCHLORIDS

Die Erfindung betrifft harte oder weichgestellte, stabilisierte thermoplastische Formmassen auf Basis von halogenhaltigen Polymeren im besonderen Polyvinylchlorid oder im wesentlichen Vinylchlorid enthaltenden Polymerisaten.

Es ist bekannt, daß chloridhaltige Polymerisate durch die Einwirkung von Wärme, z. B. bei der Verarbeitung, leicht einen Abbau erleiden, der zu unerwünschten Verfärbungen und zu einer Beeinträchtigung der mechanischen Eigenschaften führt. Zur Vermeidung dieses Abbaus werden daher den Polymerisaten vor der Verarbeitung Stabilisatoren zugesetzt. Für Polyvinylchlorid und im wesentlichen Vinylchlorid enthaltende Mischpolymerisate verwendet man besonders Organozinnverbindungen, anorganische und organische Bleisalze, organische Antimonverbindungen oder Kombinationen aus Cadmium- und Bariumcarboxylaten sowie Gemisch aus Zinkseifen und Polyoxazolinen. Diesen sogenannten Primärstabilisatoren werden häufig zur Verbesserung ihrer Wirksamkeit Costabilisatoren zugesetzt. Die Wirkungsweise von Primär- oder Costabilisatoren bzw. ihr Zusammenwirken (Synergismus) ist in der einschlägigen, z. B. in der Publikation von L. I. Nass, "Heat Stabilizers", Kirk-Othmer Encyclopedia of Chemical Technology, Band 12, 3. Auflage, Seite 225, Verlag John Wiley and Sons, 1980.

Im wesentlichen sind dies Costabilisatoren, die die Anfangsfarbe verbessern bzw. die Endstabilität erhöhen. So werden beispielsweise Epoxyverbindungen, Polyole, organische Phosphite, substituierte Dihydropyridine, 1,3-Diketone oder aber auch Kombinationen aus diesen Verbindungen verwendet.

Für Primärstabilisatoren auf Basis von Polymeren existieren zur Zeit noch keine gut wirksamen Costabilisatoren. Es besteht daher ein Bedarf an Substanzen bzw. Substanzgemischen, die die thermostabilisierende Wirksamkeit polymerer Primärstabilisatoren unterstüt zen bzw. verstärken.

Diese Nachteile des Standes der Technik wurden überwunden durch die Bereitstellung von stabilisierten Formmassen auf der Basis von chlorhaltigen Polymerisaten. Dabei handelt es sich bevorzugt um Vinylchloridhomopolymere oder -copolymere. Weiterhin bevorzugt sind Suspensions- und Massepolymere sowie Emulsionspolymere. Als Comonomere für die Copolymerisate kommen z. B. in Frage: Vinylacetat, Vinylidenchlorid, Trans-dichlorethen, Ethylen, Proppylen, Butylen, Maleinsäure, Acrylsäure, Fumarsäure, Itaconsäure. Weiter geeignete chlorhaltige Polymere sind nachchloriertes PVC und chlorierte Polyolefine, ferner Pfropfpolymerisate von PVC mit Ethylen-Vinylacetat (EVA), Acrylnitril-Butadien-Styrol (ABS) und Methacrylat-Butadien-Styrol (MBS).

Ebenfalls ein Gegenstand der Erfindung ist die Verwendung von Stabilisatorsystemen aus wenigstens einer Zinkverbindung, gekennzeichnet durch den Gehalt an einer oder mehreren Verbindungen des Zinks der Formel

$R^1O - Zn - OR^2$ (I), in der $R^1$ und $R^2$ gleich oder verschieden sein können und für geradkettige oder verzweigte, gegebenenfalls mit Hydroxylgruppen substituierte aliphatische Acylgruppen mit 8 bis 21 C-Atomen oder für gegebenenfalls mit Alkylgruppen von 1 bis 22 C-Atomen substituierte Arylgruppen stehen. Bei den $C_8$-$C_{21}$-Carbonsäuren handelt es sich beispielsweise um Benzoesäure, p-tert.-Butylbenzoesäure oder aliphatische Carbonsäuren, insbesondere Octansäure, Dodecansäure, Stearinsäure oder Oelsäure.

Als Zinkverbindungen zu nennen sind vorzugsweise Zinkseifen von Fettsäuren mit 8 bis 36, vorzugsweise 8 bis 22 Kohlenstoffatomen. Insbesondere kommen hier Caprylate, Caprinate, Laurylate, Myristate, Palmitate, Stearate und Behenate in Frage. Ebenfalls sind verwendbar die Salze von verzweigten Fettsäuren, wie 2-Ethylhexansäure, 2-Octyldecansäure oder Tetradecyloctadecansäure, oder auch Hydroxyfettsäuren, wie 9(10)-Hydroxystearinsäure oder 9,10-Dihydroxystearinsäure. Die Zinkseifen können aus den Salzen einzelner Fettsäuren oder auch von Fettsäuregemischen, wie sie aus natürlichen Fetten gewonnen werden, bestehen. Als Salze aromatischer Carbonsäuren kommen besonders die Zinksalze der Benzoesäure und der substituierten Benzoesäureester, insbesondere der alkylsubstituierten Benzoesäure, in Betracht. Als Phenolate lassen sich einsetzen: Methylphenolate, tert.-Butylphenolate, Nonylphenolate, Dodecylphenolate oder Naphthenate des Zinks.

Von besonderem Interesse sind chlorhaltige Polymerisate, enthaltend eine Verbindung der Formel (I) und zusätzlich wenigstens einen polymeren Primärstabilisator aus der Gruppe der Polyoxazoline der Formel

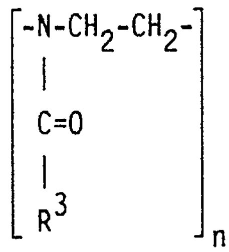

(II),

in der $R^3$ gegebenenfalls unterschiedliche, geradkettige oder verzweigte Alkylreste mit 1 bis 22 C-Atomen oder gegebenenfalls substituierte Cycloalkyl- oder Arylreste, vorzugsweise Alkylreste mit 1 bis 12 C-Atomen, bedeutet, während n für ganze Zahlen von 10 bis 10 000 steht (vgl. DE-PS 02 53 985). Verbindungen der Formel II sind beispielsweise Polymethyloxazolin, Polyethyloxazolin, Poly-n-propyloxazolin, Polyisopropyloxazolin, Polyundecyloxazolin oder Polyphenyloxazolin. Ebenfalls als Primärstabilisatoren einsetzbar sind Copolymere aus zwei verschiedenen Alkyl- bzw. Aryl-Oxazolinen mit einem jeweiligen Anteil zwischen 5 % und 95 %. Auch Terpolymere aus drei unterschiedlichen Oxazolinen mit einem Anteil von jeweils 5 bis 95 % sind verwendbar.

Gut geeignet sind auch solche stabilisierten Formmassen, die als Zusatz zu den genannten Primärstabilisatoren (I) und (II) Verbindungen des Zinns, Bleis oder Antimons oder Kombinationen aus Cad mium-, Barium-, Calcium- und Zinkverbindungen enthalten, sowie die primärstabilisatorunterstützenden Costabilisatorkombinationen aus den Verbindungen der Formeln

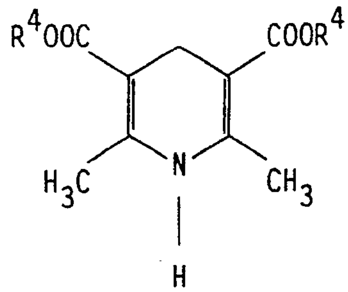

(III)

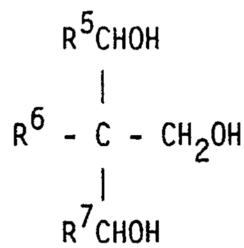

(IV)

und Copolymerisat (V) aus

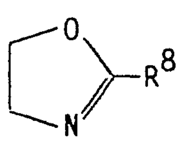

(Va)

und

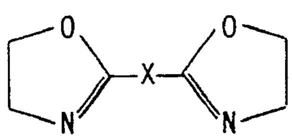

(Vb)

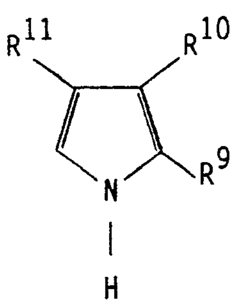

(VI)

in der für die Verbindung der Formel (III) $R^4$ $C_9$-$C_{22}$-Alkyl- oder -Alkenyl-, Cyclohexyl-, Phenyl- oder substituierte Phenyl-Gruppen bedeutet. Bevorzugt verwendet man Dihydropyridine der Formel (III) mit $R^4$ gleich $C_9$-$C_{14}$-Alkyl-Gruppen (vgl. DE-AS 28 44 130).

Die Formel (IV) bedeutet eine polyfunktionelle lineare und/oder verzweigte organische Verbindung mit 4 bis 20 C-Atomen, wobei als Funktion die Hydroxylgruppe verstanden werden soll. Bevorzugt verwendet man Verbindungen der Formel (IV) mit $R^5$ und $R^7$ gleich Wasserstoff, wobei $R^5$ Wasserstoff, Methyl, Ethyl und Propyl bedeutet; insbesondere das 2,2-Bis-(hydroxymethyl)-1-butanol (vgl. EP-A-0 315 793).

Die Verbindung der Formel (V) wird synthetisiert aus den Verbindungen der Formel (Va) und (Vb), wobei $R^8$ dabei eine geradkettige oder verzweigte Methyl-, Ethyl-, Propyl-, Isopropyl, Butyl-, Isobutyl-, Pentyl-, Isopentyl-, Hexyl-, Isohexyl, Heptyl-, Isoheptyl-, Octyl-, Isooctyl-, Nonyl-, Isononyl-, Decyl-, Isodecyl-, Dodecyl-, Isododecyl-, Tridecyl-, Tetradecyl-, Hexadecyl-, Octadecyl- oder Arachinylgruppe oder eine cyclische oder alkylsubstituierte cyclische Pentyl-, Hexyl-, Heptyl-, Octyl-, Nonyl-, Decyl-, Dodecyl-, Tridecyl-, Tetradecyl-, Hexadecyl-, Octadecyl- oder Arachinylgruppe darstellt.

$R^8$ kann außerdem auch einen Propenyl-, Butenyl-, Pentenyl-, Hexenyl-, Heptenyl-, Octenyl-, Nonenyl-, Decenyl-, Dodecenyl-, Tetradecenyl-, Hexadecenyl- oder Octadecenylrest darstellen.

Ferner kann $R^8$ auch für gegebenenfalls substituierte Arylgruppen stehen, wie beispielsweise die Phenyl-, o-Tolyl-, m-Tolyl-, p-Tolyl-, p-tert.-Butylphenyl-, p-Nonylphenyl-, p-Dodecylphenyl-, o-Hydroxyphenyl-, m-Hydroxyphenyl-, p-Hydroxyphenyl-, o-Chlorphenyl-, m-Chlorphenyl- oder die p-Chlorphenylgruppe.

Weiterhin kann $R^8$ auch eine Methoxy-, Ethoxy-, Propoxy-, Isopropoxy-, Butoxy-, Isobutoxy-, Pentyloxy-, Isopentyloxy-, Hexyloxy-, Isohexyloxy-, Heptyloxy-, Isoheptyloxy-, Octyloxy-, Isooctyloxy-, Nonyloxy-, Isononyloxy-, Decyloxy-, Isodecyloxy-, Dodecyloxy-, Isododecyloxy-, Tridecyloxy-, Tetradecyloxy-, Hexadecyloxy-, Octadecyloxy- oder Arachinyloxy- oder eine Cyan-Gruppe oder eine Methyl-, Ethyl-, Propyl-, Isopropyl-, Butyl-, Isobutyl-, Pentyl-, Isopentyl-, Hexyl-, Isohexyl-, Heptyl-, Isoheptyl-, Octyl-, Isooctyl-, Nonyl-, Isononyl-, Decyl-, Isodecyl-, Dodecyl-, Isododecyl-, Tridecyl-, Tetradecyl-, Hexadecyl-, Octadecyl- oder Arachinylcarbonylgruppe sein.

X kann eine Methylen-, Ethylen-, Propylen-, Isopropylen-, Butylen-, Isobutylen-, Pentylen-, Isopentylen-, Hexylen-, Isohexylen-, Heptylen-, Isoheptylen-, Octylen-, Isooctylen-, Nonylen-, Isononylen-, Decylen-, Isodecylen-, Dodecylen-, Isododecylen-, Tridecylen-, Tetradecylen-, Hexadecylen-, Octadecylen- oder Arachinylengruppe darstellen.

X kann außerdem auch einen Ethenylen-, Propenylen-, Butenylen-, Pentenylen-, Hexenylen-, Heptenylen-, Octenylen-, Nonenylen-, Decenylen-, Dodecenylen-, Tetradecenylen-, Hexadecenylen- oder Octadecenylenrest darstellen.

Ferner kann X auch für gegebenenfalls substituierte Arylgruppen stehen, wie beispielsweise die Phenylen-, o-Tolylen-, o-Nonylphenylen-, o-Dodecylphenylen-, o-Hydroxyphenylen-, o-Chlorphenylen oder o-Cyanphenylen-Gruppe.

Weiterhin kann X eine Ethylen-, Propylen-, Isopropylen-, Butylen-, Isobutylen-, Pentylen-, Isopentylen-, Hexylen- Isohexylen-, Heptylen-, Isoheptylen-, Octylen-, Isooctylen-, Nonylen-, Isononylen-, Decylen-, Isodecylen-, Dodecylen-, Isododecylen-, Tridecylen-, Tetradecylen-, Hexadecylen-, Octadecylen- oder Arachinylencarbonylgruppe sein.

Bevorzugt verwendet man Verbindungen aus den Formeln (Va) und (Vb) mit $R^8$ gleich Methyl, Ethyl oder Propyl und mit X gleich Ethylen, Trimethylen, Tetramethylen oder Phenylen.

Die Herstellung erfolgt durch Umsetzung der Verbindungen (Va) und (Vb) im Molverhältnis von 95 zu 5, im besonderen von 97,5 zu 2,5 Mol-% in Ethylbenzol (enthält ca. 95 ppm Wasser) mit katalytischen Mengen (0,5 bis 1,5 Mol-%, im besonderen 0,9 Mol-5) an Toluol-4-sulfonsäuremethylester und einer Reaktionszeit von ca. 12 bis 15 Minuten bei 133 °C und einer Nachpolymerisationszeit von 60 Minuten bei 133 °C. Man erhält ein vernetztes Copolymer (V) in Ausbeuten > 95 %.

Für die Verbindung der Formel (VI) ist $R^9$ Methyl oder Phenyl, $R^{10}$ Wasserstoff, Cyano, $C_2$-$C_{10}$-Alkylcarbonyl, $C_7$-$C_{10}$-Arylcarbonyl, Phenylaminocarbonyl, m-Hydroxyphenylaminocarbonyl, $\alpha$-Hydroxyethyl oder mit einem $C_1$-$C_{18}$-Alkohol, $C_6$-$C_8$-Cycloalkanol, $C_5$-$C_{19}$-Aralkanol, $C_2$-$C_{20}$-Alkandiol, $C_4$-$C_{20}$-Thioalkandiol oder Pentaerythrit verestertes Carboxyl und $R^{11}$ Methyl-Phenyl oder ($C_1$-$C_{19}$-Alkoxyl)-methyl.

$R^{10}$ ist als $C_2$-$C_{19}$-Alkylcarbonyl insbesondere Propionyl, Butyryl, Lauroyl oder vor allem Acetyl, als $C_7$-$C_{19}$-Arylcarbonyl gegebenenfalls substituiertes Benzoyl, insbesondere Benzoyl selbst, und als verestertes Carboxyl solches, das mit $C_1$-$C_{18}$-Alkanol, wie z. B. Methanol, Ethanol, n-Octanol oder Laurylalkohol, $C_6$-$C_{19}$-Aralkanol, wie z. B. Benzylalkohol oder Furfurylalkohol, $C_5$-$C_8$-Cycloalkanol, wie z. B. Cyclohexanol, $C_2$-$C_{20}$-Alkandiol, wie Ethylenglykol oder 1,2-Butylenglykol, $C_4$-$C_{20}$-Thioalkandiol, wie z. B. 3-Thio-1,5-dihydroxy-pentan oder mit Pentaerythrit verestert ist.

$R^{10}$ ist als $C_1$-$C_{18}$-Alkoxymethyl insbesondere Methoxymethyl oder Ethoxymethyl.

Bevorzugt verwendet man die Pyrrole 2-Methyl-3-ethoxycarbonyl-4-phenyl-pyrrol und 2-Methyl-3-methoxycarbonyl-4-phenyl-pyrrol.

Für die Darstellung der Pyrrole gibt es mehrere Wege (vgl. Houben-Weyl, Methoden der organischen Chemie, Stickstoff-Verbindungen II, Band 11/1).

Eine Möglichkeit der Herstellung besteht darin, $\alpha$-Chlorketone und $\beta$-Ketoester unter Wirkung von $NH_3$ zu kondensieren.

Die stabilisierten Formmassen enthalten die Verbindungen der Formel I bzw. II zweckmäßigerweise in Mengen von je 0,02 bis 2,0, insbesondere je 0,05 bis 1,0 Gewichtsprozent, bezogen auf chlorhaltiges Polymere.

Die stabilisierten Formmassen enthalten die Verbindungen der Formeln III bis VI zweckmäßigerweise in Mengen von 0 bis 2,0, vorzugsweise für Verbindungen der Formel III in Mengen von 0,05 bis 0,1, der Formel IV in Mengen von 0,02 bis 1,0, der Formel VI 0,05 bis 1,0 Gewichtsprozent und für Verbindungen der Formel V zweckmäßigerweise in Mengen von 0,001 bis 2,0, insbesondere 0,01 bis 0,05 Gewichtsprozent, bezogen auf chlorhaltiges Polymer.

Die Costabilisatoren werden wie folgt eingesetzt:

Es müssen wenigstens zwei Vertreter aus den Substanzklassen III, V oder VI verwendet werden; zusätzlich dazu kann eine Verbindung der Formel IV hinzugefügt werden.

Zu den aufgeführten Costabilisatoren können noch handelsübliche Costabilisatoren mitverwendet werden.

Geeignete herkömmliche Phosphite sind Phosphite der allgemeinen Formeln VII und VIII

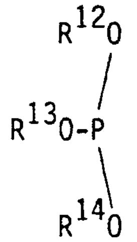
(VII)

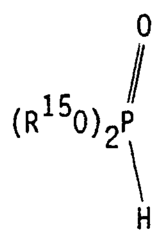
(VIII)

in denen $R^{12}$, $R^{13}$ und $R^{14}$ gleich oder verschieden sind und $C_6$-$C_{18}$-Alkyl, einen durch $C_1$-$C_9$-Alkyl oder $C_1$-$C_9$-Alkoxy substituierten oder unsubstituierten Phenylrest oder $C_5$-$C_7$-Cycloalkyl bedeuten, und worin $R^{15}$ $C_5$-$C_{18}$-Alkyl ist.

Bedeuten $R^{12}$, $R^{13}$, $R^{14}$ und $R^{15}$ $C_6$-$C_{18}$-Alkyl, so handelt es sich dabei z. B. um n-Hexyl, n-Octyl, n-Nonyl, Decyl, Dodecyl, Tetradecyl, Hexadecyl oder Octadecyl. Bevorzugt sind Alkylgruppen mit 8 bis 12 C-Atomen.

Als substituiertes Phenyl bedeuten $R^{12}$, $R^{13}$ und $R^{14}$ beispielsweise Tolyl, Ethylphenyl, Xylyl, Nonyl, Cumyl, Kresyl, 4-Methoxyphenyl, 2,4-Dimethoxyphenyl, Ethoxyphenyl, Butoxyphenyl, p-n-Octylphenyl oder p-n-Nonylphenyl.

Ganz besonders geeignete Phosphite sind Trioctyl-, Tridecyl-, Tridodecyl-, Tritetradecyl-, Tristearyl-, Trioleyl-, Triphenyl-, Trikresyl-, Tris-p-nonylphenyl- oder Tricyclohexylphosphit, und besonders bevorzugt sind die Aryl-Dialkyl- sowie die Alkyl-Diaryl-Phosphite, wie z. B. Phenyldidecyl, Nonylphenyl-didecyl-, (2,4-Di-tert.-butylphenyl)-di-dodecylphosphit, (2,6-Di-tert.-butylphenyl)di-dodecylphosphit.

Beispiele von Antioxidantien sind alkylierte Monophenole und Hydrochinone, hydroxylierte Thiodiphenylether, 1,4-Alkyliden-bis-phenole, Benzylverbindungen, Acylaminophenole, Ester oder Amide der $\beta$-(3,5-Di-tert.-butyl-4-hydroxyphenyl)-propionsäure und Ester der $\beta$-(5-tert.-Butyl-4-hydroxy-3-methylphenyl)-propionsäure.

Bevorzugte Antioxidantien sind alkylierte Monophenole, Alkyliden-Bisphenole und phenylsubstituierte Propionsäureester, insbesondere aber 2,6-Di-tert.-butyl-p-kresol, 2,2-Bis-(4′-hydroxyphenyl)-propan und $\beta$-(3,5-Di-tert.-butyl-4-hydroxyphenyl)-propionsäure-n-octadecyl-ester.

Die Verbindungen der Formeln III bis VI können auch mit weiteren stickstoffhaltigen organischen Stabilisatoren eingesetzt werden. Beispiele hierfür sind Cyanamid, Dicyandiamid, Guanamine, wie Benzoguanamin, Indole, wie Phenylindol, Paryzole (beispielsweise wie in GB-PS 866 936 beschrieben), Harnstoffe und Thioharnstoffe, wie Monophenylharnstoff und Diphenylthioharnstoff, Aminocrotonsäureester; außerdem $\beta$-Diketone, wie Stearylbenzoylmethan, und Polyole, wie Pentaerythrit.

Bei den erfindungsgemäßen stabilisierten Formmassen auf der Basis von Polymeren des Vinylchlorids,

die als Costabilisatoren Verbindungen der Formeln III bis VI enthalten, wurde beobachtet, daß diese Verbindungen die stabiliserende Wirkung einer Primärstabilisatormischung aus Zinkverbindungen und Polymeren aus der Gruppe der Polyoxazoline in nicht vorhersehbarem Maß verstärken. Der positive Einfluß dieser Costabilisatoren äußert sich in einer Verbesserung der Anfangsfarbe und in einer Verlängerung der Endstabilität. Dieser Effekt konnte bisher durch Zugabe von bekannten Costabilisatormischungen nicht erreicht werden.

Die Herstellung der erfindungsgemäßen stabilisierten Formmassen kann durch übliche Methoden, z. B. durch einfaches mechanisches Vermischen der Komponenten in konventionellen Mischern erfolgen. Bei diesem Mischvorgang können weitere übliche Verarbeitungshilfsmittel eingearbeitet werden, wie z. B. Gleitmittel (Montanwachse oder Polyolpartialester), Weichmacher, Füllstoffe, Lichtstabilisatoren, Farbstoffe oder weitere Costabilisatoren, wie z. B. epoxydierte Fettsäureester.

Die homogene Verteilung der Stabilisatoren im PVC kann z. B. mit Hilfe eines Zweiwalzenmischers bei 150 bis 200 °C erfolgen.

<u>Herstellung und Prüfung der Walzfelle</u>

Die Wirkung der Stabilisatorkombinationen wurde durch Bestimmung der statischen Thermostabilität von Walzfellen geprüft. Hierzu wurden die Stabilisatorkombinationen und gegebenenfalls Weichmacher und Verarbeitungshilfsmittel mit Polyvinylchlorid 30 Sekunden in einer Labormühle gemischt und anschließend auf einem Doppelwalzwerk bei einer Walztemperatur von 170 °C im Gleichlauf innerhalb von 5 Minuten zu 1 mm starken Walzfellen verarbeitet. Aus den Walzfellen wurden Streifen mit den Maßen 14 x 250 mm geschnitten, die anschließend in einem speziellen Ofen (Metrastat Typ Sigma) bei 180 °C thermisch belastet wurden. Die Probestreifen wurden dabei kontinuierlich aus der Heizzone ausgefahren und zeigen durch die Farbveränderung die Wirkung der Stabilisatoren.

Zur objektiven Beurteilung der Farbveränderungen und zum Vergleich der Probestreifen wurden die Yellowness-Indizes (YI; ASTM-Methode E 313-73) mit einem Farbmeßgerät (LabScan 5100 plus) der Firma Dr. Slevogt & Co. bestimmt und gegen die thermische Belastungszeit aufgetragen. Hohe YI-Werte bedeuten starke Verfärbung und damit geringe Stabilität. Als Stabilisatoren wurden eingesetzt:

Zn = Zinkstearat
ZnOct = Zinkoctoat
Ca = Calciumstearat
CaBeh = Calciumbehenat
Ba = Bariumstearat
Rhod = Benzoylstearoylmethan
PX = Polyethyloxazolin
Cop = Copolymer aus Ethyl- und Tetramethylenbisoxazolin
PC = Copolymer aus Methyl- und Isopropyloxazolin
TMP = Trimethylolpropan
DHP = Dihydro-dimethyl-bis-(dodecylcarbonyl)-pyridin
Py = Methyl-phenyl-ethyloxycarbonyl-pyrrol

Aus folgenden Bestandteilen wurden Rezepturen zusammengestellt (GT = Gewichtsteile):

<u>Rezeptur A:</u>
- 100 GT Suspensions-Polyvinylchlorid (K-Wert 70; VESTOLIT S 7054; Hüls AG, Marl)
- 30 GT Dioctylphthalat (VESTINOL AH; Hüls AG, Marl)
- 0,3 GT Montanwachs

<u>Rezeptur B:</u>
- 100 GT Suspensions-Polyvinylchlorid (K-Wert 70; VESTOLIT S 7054; Hüls AG, Marl) - 30 GT Dioctylphthalat (VESTINOL AH; Hüls AG, Marl)
- 0,3 GT Zinkstearat - 0,6 GT Bariumstearat <u>Rezeptur C:</u> - 100 GT Suspensions-Polyvinylchlorid (K-Wert 70; VESTOLIT S 7054; Hüls AG, Marl)
- 1,0 GT Stearinsäure

<u>Rezeptur D:</u>
- 100 GT Suspensions-Polyvinylchlorid (K-Wert 60; VESTOLIT S 6058; Hüls AG, Marl)
- 1,0 GT Stearinsäure

<u>Rezeptur E:</u> - 100 GT Suspensions-Polyvinylchlorid (K-Wert 58; VESTOLIT M 5867; Hüls AG, Marl)
- 5,0 GT epoxidiertes Sojabohnenöl (Reoplast 39, Ciba-Geigy AG, Bensheim)

Zur weiteren Erläuterung der Erfindung und zum Nachweis des überraschenden technischen Fortschritts dienen die im folgenden beschriebenen Beispiele.

Zur Herstellung der Polyvinylchlorid-Formmassen wurden die Rezepturen A bis E mit den Stabilisatoren der angegebenen Tabellen versetzt und in der oben beschriebenen Weise zu Probestreifen verarbeitet.

## Ansprüche

1. Stabilisierte thermoplastische Formmassen auf Basis von halogenhaltigen Polymeren im besonderen Polyvinylchlorid oder im wesentlichen Vinylchlorid enthaltenden Polymerisaten,
gekennzeichnet durch
den Gehalt an einer oder mehreren Verbindungen des Zinks der Formel
$R^1O - Zn - OR^2$ (I),
in der $R^1$ und $R^2$ gleich oder verschieden sein können und für geradkettige oder verzweigte, gegebenenfalls mit Hydroxylgruppen substituierte aliphatische Acylgruppen mit 8 bis 21 C-Atomen oder für gegebenenfalls mit Alkylgruppen von 1 bis 22 C-Atomen substituierte Arylgruppen stehen
und zusätzlich wenigstens einem polymeren Primärstabilisator aus der Gruppe der Polyoxazoline der Formel

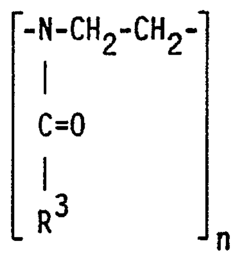

(II)

in der $R^3$ gegebenenfalls unterschiedliche, geradkettige oder verzweigte Alkylreste mit 1 bis 22 C-Atomen oder gegebenenfalls substituierte Cycloalkyl- oder Arylreste, vorzugsweise Alkylreste mit 1 bis 12 C-Atomen, bedeutet, während n für ganze Zahlen von 10 bis 10 000 steht,
und mindestens zwei primärstabilisatorunterstützenden Verbindungen der Formeln III, V oder VI und gegebenenfalls zusätzlich eine Substanz gemäß Formel IV

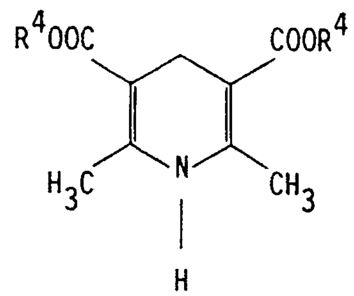

(III)

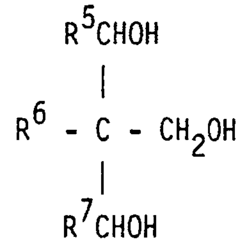

(IV)

und Copolymerisat (V) aus

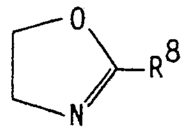

(Va)

und

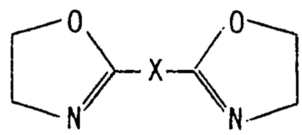

(Vb)

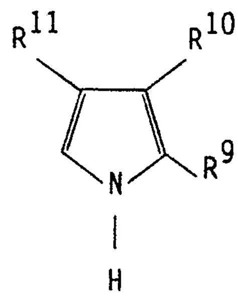

(VI)

in der für die Verbindung der Formel (III) $R^4$ $C_9$-$C_{22}$-Alkyl- oder -Alkenyl-, Cyclohexyl-, Phenyl- oder substituierte Phenyl-Gruppen bedeutet;

in der die Formel (IV) eine polyfunktionelle lineare und/oder verzweigte organische Verbindung mit 4 bis 20 C-Atomen bedeutet, wobei als Funktion die Hydroxylgruppe verstanden werden soll; in der für die Verbindung der Formel (V), synthetisiert aus den Verbindungen der Formel (Va) und (Vb), $R^8$ eine geradkettige oder verzweigte Alkylgrupe mit $C_1$-$C_{20}$-Atomen, eine cyclische und/oder alkylsubstituierte cyclische Alkylgruppe mit $C_5$-$C_{10}$-Atomen, eine geradkettige oder verzweigte Alkenylgruppe mit $C_3$-$C_{18}$-Atomen, eine alkyl-, halogen- oder hydroxysubstituierte Arylgruppe, eine geradkettige oder verzweigte Alkoxygruppe mit $C_1$-$C_{20}$-Atomen, eine geradkettige oder verzweigte Alkylcarbonylgruppe mit $C_1$- $C_{20}$-Atomen oder eine Cyangruppe ist;

X eine geradkettige oder verzweigte Alkylengruppe mit $C_1$-$C_{20}$-Atomen, eine cyclische und/oder alkylsubstituierte cyclische Alkylengruppe mit $C_5$-$C_{10}$-Atomen, eine geradkettige oder verzweigte Alkenylengruppe mit $C_3$-$C_{18}$-Atomen, eine alkyl-, halogen-oder hydroxysubstituierte Arylengruppe, eine geradkettige oder verzweigte Alkoxylengruppe mit $C_1$-$C_{20}$-Atomen, eine geradkettige oder verzweigte Alkylcarbonylengruppe mit $C_1$-$C_{20}$-Atomen bedeutet;

und in der für die Verbindung der Formel (VI) $R^9$ Methyl oder Phenyl, $R^{10}$ Wasserstoff, Cyano, $C_2$-$C_{10}$-Alkylcarbonyl, $C_7$-$C_{10}$-Arylcarbonyl, Phenylaminocarbonyl, m-Hydroxyphenylaminocarbonyl, $\alpha$-Hydroxyethyl oder mit einem $C_1$-$C_{18}$-Alkohol, $C_6$-$C_8$-Cycloalkanol, $C_5$-$C_{19}$-Aralkanol, $C_2$-$C_{20}$-Alkandiol, $C_4$-$C_{20}$-Thioalkandiol oder Pentaerythrit verestertes Carboxyl ist und $R^{11}$ Methyl-Phenyl oder ($C_1$-$C_{19}$-Alkoxy)-methyl ist.

2. Stabilisierte Formmassen nach Anspruch 1,
dadurch gekennzeichnet,
daß die Verbindungen der Formel I bzw. II in Mengen von je 0,02 bis 2,0 sowie die Verbindungen der Formeln III bis VI in Mengen von 0 bis 2,0 Gewichtsprozent, bezogen auf chlorhaltiges Polymere, enthalten.

3. Stabilisierte Formmassen nach Anspruch 1,
dadurch gekennzeichnet,
daß die Verbindungen der Formeln I bis VI als Zusatz Stabilisatoren in Form von Verbindungen des Zinns, Bleis oder Antimons oder in Form von Kombinationen aus Cadmium-, Barium-, Calcium-und Zinkverbindungen sowie zusätzliche Costabilisatoren in Form von Verbindungen der Stoffklassen Phosphite, 1,3-Diketone, Polyole, alkylierte Phenole, Cyanamide, Dicyandiamide, Guanamine, Indole, Pyrazole, Harnstoffe, Thioharnstoffe, Monophenylharnstoffe, Diphenylthioharnstoff und Aminocortonsäureester enthalten können.

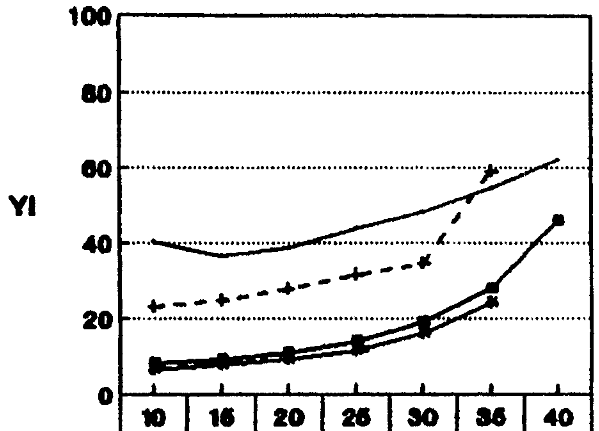


| Stabilisatoren | | 10 | 15 | 20 | 25 | 30 | 35 | 40 |
|---|---|---|---|---|---|---|---|---|
| Zn/Ca | ── | 40 | 36 | 39 | 44 | 48 | 56 | 62 |
| Zn/PC | -+- | 23 | 25 | 28 | 31 | 35 | 59 | - |
| Zn/PC/TMP/DHP | ─*─ | 6 | 8 | 9 | 12 | 16 | 24 | - |
| Zn/PC/TMP/DHP/Py | ─▪─ | 8 | 9 | 11 | 14 | 19 | 28 | 46 |

YI

thermische Belastung [min]

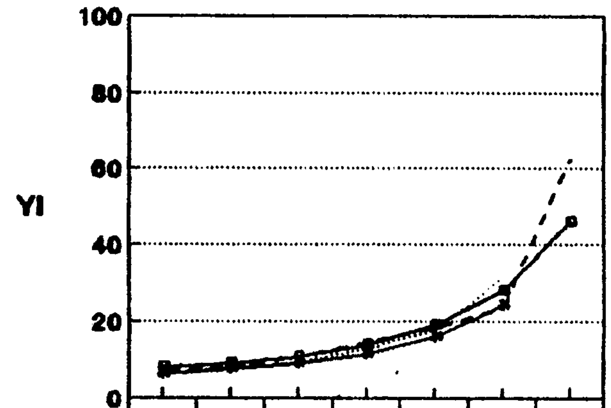


| Stabilisatoren | | 10 | 15 | 20 | 25 | 30 | 35 | 40 |
|---|---|---|---|---|---|---|---|---|
| Zn/PC/TMP/DHP | ─*─ | 6 | 8 | 9 | 12 | 16 | 24 | - |
| Zn/PC/TMP/DHP/Py | ─▪─ | 8 | 9 | 11 | 14 | 19 | 28 | 46 |
| Zn/PC/TMP/DHP/Cop | ······ | 6 | 7 | 10 | 13 | 17 | 31 | - |
| Zn/PC/TMP/DHP/Py/Cop | - - - | 8 | 8 | 11 | 15 | 18 | 23 | 62 |

YI

thermische Belastung [min]

**Rezeptur:**

**100 GT VESTOLIT S 7054**
**1.0 GT Stearinsäure**

| Stabilisatormischungen | Zn | Ca | PC | TMP | DHP | Py | Cop |
|---|---|---|---|---|---|---|---|
| Zn/Ca | 0,5 | 1 | | | | | |
| Zn/PC | 0,2 | | 0,2 | | | | |
| Zn/PC/TMP | 0,2 | | 0,2 | 0,5 | | | |
| Zn/PC/DHP | 0,2 | | 0,2 | | 0,07 | | |
| Zn/PC/TMP/DHP | 0,2 | | 0,2 | 0,5 | 0,07 | | |
| Zn/PC/TMP/DHP/Py | 0,2 | | 0,2 | 0,5 | 0,07 | 0,1 | |
| Zn/PC/TMP/DHP/Cop | 0,2 | | 0,17 | 0,5 | 0,07 | | 0,03 |
| Zn/PC/TMP/DHP/Py/Cop | 0,2 | | 0,17 | 0,5 | 0,07 | 0,1 | 0,03 |

Gewichtsteile [GT]

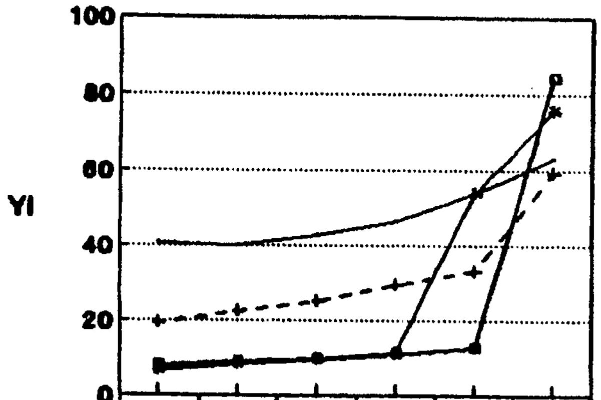


| Stabilisatoren | | 10 | 15 | 20 | 25 | 30 | 35 |
|---|---|---|---|---|---|---|---|
| Zn/Ca | — | 41 | 40 | 43 | 46 | 54 | 63 |
| Zn/PC | -+- | 19 | 22 | 25 | 29 | 33 | 59 |
| Zn/PC/TMP/DHP | -*- | 6 | 8 | 9 | 11 | 54 | 75 |
| Zn/PC/TMP/DHP/Py | -■- | 8 | 9 | 9 | 11 | 12 | 84 |

YI

thermische Belastung [min]

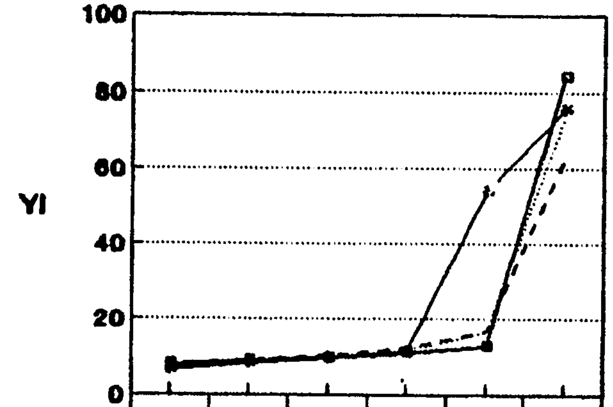


| Stabilisatoren | | 10 | 15 | 20 | 25 | 30 | 35 |
|---|---|---|---|---|---|---|---|
| Zn/PC/TMP/DHP | -*- | 6 | 8 | 9 | 11 | 54 | 75 |
| Zn/PC/TMP/DHP/Py | -■- | 8 | 9 | 9 | 11 | 12 | 84 |
| Zn/PC/TMP/DHP/Cop | ····· | 7 | 8 | 10 | 12 | 16 | 73 |
| Zn/PC/TMP/DHP/Py/Cop | - - - | 7 | 9 | 10 | 12 | 17 | 63 |

YI

thermische Belastung [min]

**Rezeptur:**

**100 GT VESTOLIT S 6058**
**1.0 GT Stearinsäure**

| Stabilisatormischungen | Zn | Ca | PC | TMP | DHP | Py | Cop |
|---|---|---|---|---|---|---|---|
| Zn/Ca | 0,5 | 1 | | | | | |
| Zn/PC | 0,2 | | 0,2 | | | | |
| Zn/PC/TMP | 0,2 | | 0,2 | 0,5 | | | |
| Zn/PC/DHP | 0,2 | | 0,2 | | 0,07 | | |
| Zn/PC/TMP/DHP | 0,2 | | 0,2 | 0,5 | 0,07 | | |
| Zn/PC/TMP/DHP/Py | 0,2 | | 0,2 | 0,5 | 0,07 | 0,1 | |
| Zn/PC/TMP/DHP/Cop | 0,2 | | 0,17 | 0,5 | 0,07 | | 0,03 |
| Zn/PC/TMP/DHP/Py/Cop | 0,2 | | 0,17 | 0,5 | 0,07 | 0,1 | 0,03 |

Gewichtsteile [GT]

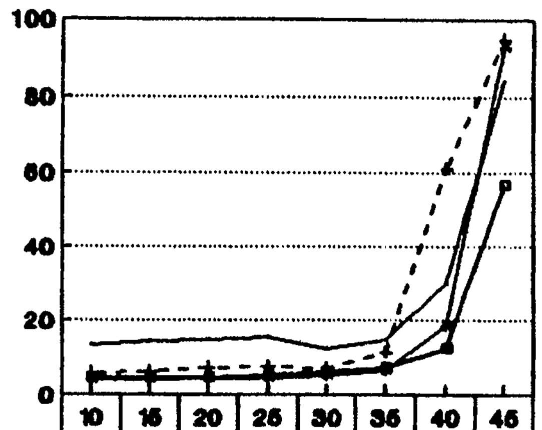


| Stabilisatoren | | 10 | 15 | 20 | 25 | 30 | 35 | 40 | 45 |
|---|---|---|---|---|---|---|---|---|---|
| Zn/Ca | —— | 13 | 14 | 15 | 15 | 12 | 14 | 30 | 84 |
| Zn/PC | —+— | 6 | 6 | 7 | 8 | 7 | 11 | 61 | 96 |
| Zn/PC/TMP/DHP | —*— | 4 | 4 | 4 | 4 | 5 | 6 | 18 | 93 |
| Zn/PC/TMP/DHP/Py | —■— | 4 | 4 | 4 | 5 | 6 | 7 | 12 | 57 |

YI

thermische Belastung [min]

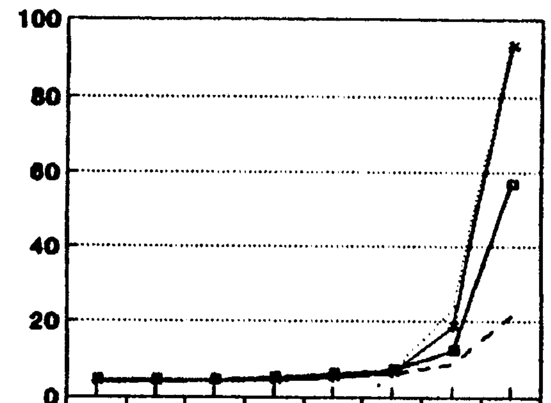


| Stabilisatoren | | 10 | 15 | 20 | 25 | 30 | 35 | 40 | 45 |
|---|---|---|---|---|---|---|---|---|---|
| Zn/PC/TMP/DHP | —*— | 4 | 4 | 4 | 4 | 5 | 6 | 18 | 93 |
| Zn/PC/TMP/DHP/Py | —□— | 4 | 4 | 4 | 5 | 6 | 7 | 12 | 57 |
| Zn/PC/TMP/DHP/Cop | ······ | 4 | 4 | 4 | 4 | 5 | 7 | 23 | 95 |
| Zn/PC/TMP/DHP/Py/Cop | - - - | 4 | 4 | 4 | 5 | 5 | 6 | 9 | 21 |

YI

thermische Belastung [min]

**Rezeptur:**

**100 GT VESTOLIT S 7054**
**30 GT VESTINOL AH**
**0.3 GT Montanwachs**

| Stabilisatormischungen | Zn | Ca | PC | TMP | DHP | Py | Cop |
|---|---|---|---|---|---|---|---|
| Zn/Ca | 0,5 | 1 | | | | | |
| Zn/PC | 0,2 | | 0,2 | | | | |
| Zn/PC/TMP | 0,2 | | 0,2 | 0,5 | | | |
| Zn/PC/DHP | 0,2 | | 0,2 | | 0,07 | | |
| Zn/PC/TMP/DHP | 0,2 | | 0,2 | 0,5 | 0,07 | | |
| Zn/PC/TMP/DHP/Py | 0,2 | | 0,2 | 0,5 | 0,07 | 0,1 | |
| Zn/PC/TMP/DHP/Cop | 0,2 | | 0,17 | 0,5 | 0,07 | | 0,03 |
| Zn/PC/TMP/DHP/Py/Cop | 0,2 | | 0,17 | 0,5 | 0,07 | 0,1 | 0,03 |

Gewichtsteile [GT]

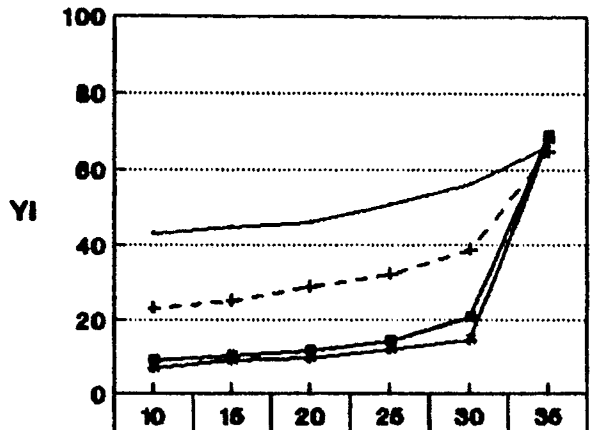


| Stabilisatoren | | 10 | 15 | 20 | 25 | 30 | 35 |
|---|---|---|---|---|---|---|---|
| Zn/Ca | —— | 43 | 45 | 46 | 51 | 56 | 66 |
| Zn/PX | -+- | 23 | 25 | 29 | 32 | 38 | 65 |
| Zn/PX/TMP/DHP | -*- | 7 | 9 | 10 | 12 | 15 | 68 |
| Zn/PX/TMP/DHP/Py | -■- | 9 | 10 | 11 | 14 | 20 | 69 |

YI

thermische Belastung [min]

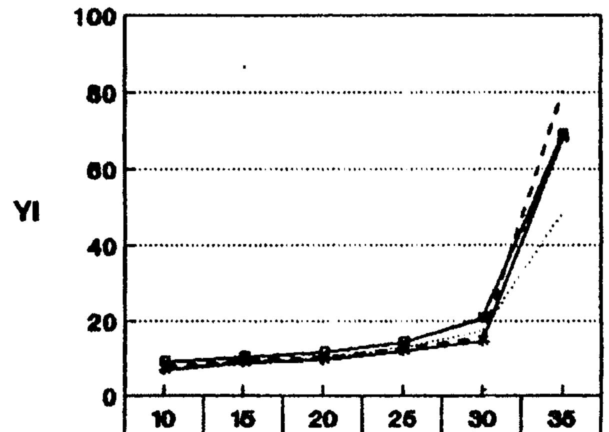


| Stabilisatoren | | 10 | 15 | 20 | 25 | 30 | 35 |
|---|---|---|---|---|---|---|---|
| Zn/PX/TMP/DHP | -*- | 7 | 9 | 10 | 12 | 15 | 68 |
| Zn/PX/TMP/DHP/Py | -■- | 9 | 10 | 11 | 14 | 20 | 69 |
| Zn/PX/TMP/DHP/Cop | ····· | 7 | 8 | 10 | 13 | 17 | 48 |
| Zn/PX/TMP/DHP/Py/Cop | - - - | 7 | 9 | 10 | 12 | 15 | 80 |

YI

thermische Belastung [min]

**Rezeptur:**

**100 GT VESTOLIT S 6058**
**1.0 GT Stearinsäure**

| Stabilisatormischungen | Zn | Ca | PX | TMP | DHP | Py | Cop |
|---|---|---|---|---|---|---|---|
| Zn/Ca | 0,5 | 1 | | | | | |
| Zn/PX | 0,2 | | 0,2 | | | | |
| Zn/PX/TMP | 0,2 | | 0,2 | 0,5 | | | |
| Zn/PX/DHP | 0,2 | | 0,2 | | 0,07 | | |
| Zn/PX/TMP/DHP | 0,2 | | 0,2 | 0,5 | 0,07 | | |
| Zn/PX/TMP/DHP/Py | 0,2 | | 0,2 | 0,5 | 0,07 | 0,1 | |
| Zn/PX/TMP/DHP/Cop | 0,2 | | 0,17 | 0,5 | 0,07 | | 0,03 |
| Zn/PX/TMP/DHP/Py/Cop | 0,2 | | 0,17 | 0,5 | 0,07 | 0,1 | 0,03 |

Gewichtsteile [GT]

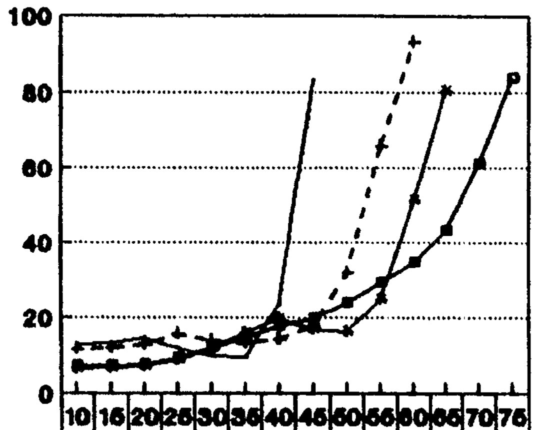


| Stabilisatoren | | 10 | 15 | 20 | 25 | 30 | 35 | 40 | 45 | 50 | 55 | 60 | 65 | 70 | 75 |
|---|---|---|---|---|---|---|---|---|---|---|---|---|---|---|---|
| Nullprobe | —— | 13 | 13 | 15 | 12 | 10 | 9 | 23 | 83 | - | - | - | - | - | - |
| Zn/PX | -+- | 11 | 12 | 13 | 15 | 14 | 13 | 14 | 18 | 32 | 66 | 93 | - | - | - |
| Zn/PX/TMP/DHP | —*— | 6 | 7 | 7 | 9 | 12 | 16 | 20 | 17 | 16 | 25 | 51 | 80 | - | - |
| Zn/PX/TMP/DHP/Py | —▫— | 7 | 7 | 7 | 9 | 12 | 15 | 18 | 20 | 24 | 29 | 34 | 43 | 61 | 84 |

YI

thermische Belastung [min]

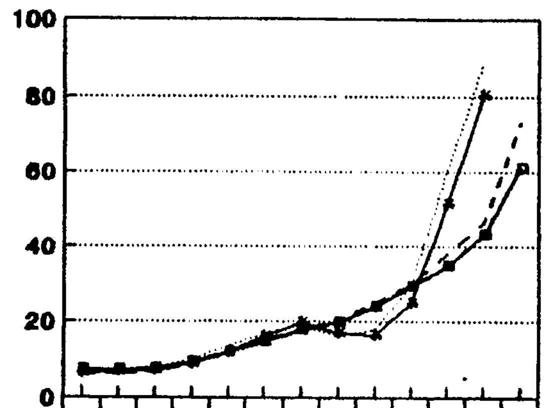


| Stabilisatoren | | 10 | 15 | 20 | 25 | 30 | 35 | 40 | 45 | 50 | 55 | 60 | 65 | 70 |
|---|---|---|---|---|---|---|---|---|---|---|---|---|---|---|
| Zn/PX/TMP/DHP | —*— | 6 | 7 | 7 | 9 | 12 | 16 | 20 | 17 | 16 | 25 | 51 | 80 | - |
| Zn/PX/TMP/DHP/Py | —▫— | 7 | 7 | 7 | 9 | 12 | 15 | 18 | 20 | 24 | 29 | 34 | 43 | 61 |
| Zn/PX/TMP/DHP/Cop | ······ | 7 | 7 | 8 | 10 | 13 | 17 | 19 | 16 | 18 | 29 | 60 | 89 | - |
| Zn/PX/TMP/DHP/Py/Cop | - - - | 6 | 6 | 7 | 9 | 12 | 15 | 18 | 20 | 25 | 30 | 35 | 46 | 73 |

YI

thermische Belastung [min]

## Rezeptur:

100 GT VESTOLIT S 7054
30 GT VESTINOL AH
0.3 GT Zinkstearat
0.6 GT Bariumstearat

| Stabilisatormischungen | Zn | PX | TMP | DHP | Py | Cop |
|---|---|---|---|---|---|---|
| Nullprobe | 0 | | | | | |
| Zn/PX | 0,2 | 0,2 | | | | |
| Zn/PX/TMP | 0,2 | 0,2 | 0,5 | | | |
| Zn/PX/DHP | 0,2 | 0,2 | | 0,07 | | |
| Zn/PX/TMP/DHP | 0,2 | 0,2 | 0,5 | 0,07 | | |
| Zn/PX/TMP/DHP/Py | 0,2 | 0,2 | 0,5 | 0,07 | 0,1 | |
| Zn/PX/TMP/DHP/Cop | 0,2 | 0,17 | 0,5 | 0,07 | | 0,03 |
| Zn/PX/TMP/DHP/Py/Cop | 0,2 | 0,17 | 0,5 | 0,07 | 0,1 | 0,03 |

Gewichtsteile [GT]

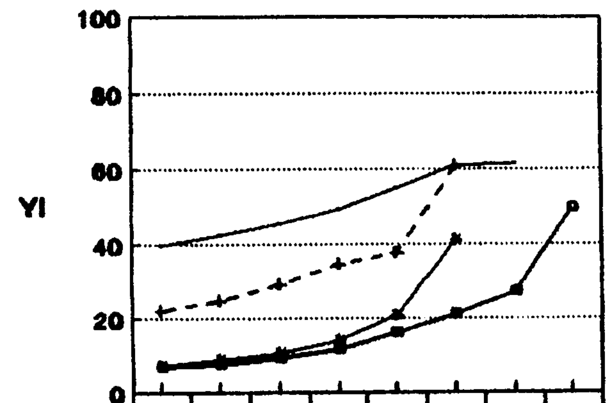


| Stabilisatoren | | 10 | 15 | 20 | 25 | 30 | 35 | 40 | 45 |
|---|---|---|---|---|---|---|---|---|---|
| Zn/Ca | —— | 40 | 42 | 45 | 49 | 55 | 61 | 61 | - |
| Zn/PX | -+- | 22 | 25 | 29 | 34 | 37 | 61 | - | - |
| Zn/PX/TMP/DHP | -*- | 7 | 9 | 10 | 14 | 21 | 41 | - | - |
| Zn/PX/TMP/DHP/Py | -■- | 7 | 7 | 9 | 12 | 16 | 21 | 27 | 49 |

YI

thermische Belastung [min]

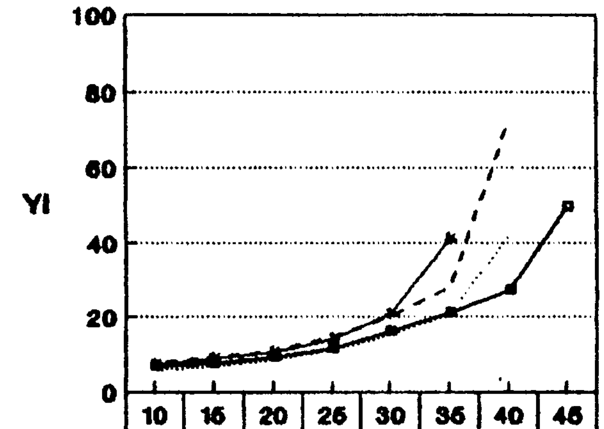


| Stabilisatoren | | 10 | 15 | 20 | 25 | 30 | 35 | 40 | 45 |
|---|---|---|---|---|---|---|---|---|---|
| Zn/PX/TMP/DHP | -*- | 7 | 9 | 10 | 14 | 21 | 41 | - | - |
| Zn/PX/TMP/DHP/Py | -□- | 7 | 7 | 9 | 12 | 16 | 21 | 27 | 49 |
| Zn/PX/TMP/DHP/Cop | ····· | 6 | 7 | 8 | 11 | 15 | 21 | 42 | - |
| Zn/PX/TMP/DHP/Py/Cop | - - - | 8 | 9 | 11 | 14 | 20 | 28 | 73 | - |

YI

thermische Belastung [min]

**Rezeptur:**

**100 GT VESTOLIT S 7054**
**1.0 GT Stearinsäure**

| Stabilisatormischungen | Zn | Ca | PX | TMP | DHP | Py | Cop |
|---|---|---|---|---|---|---|---|
| Zn/Ca | 0,5 | 1 | | | | | |
| Zn/PX | 0,2 | | 0,2 | | | | |
| Zn/PX/TMP | 0,2 | | 0,2 | 0,5 | | | |
| Zn/PX/DHP | 0,2 | | 0,2 | | 0,07 | | |
| Zn/PX/TMP/DHP | 0,2 | | 0,2 | 0,5 | 0,07 | | |
| Zn/PX/TMP/DHP/Py | 0,2 | | 0,2 | 0,5 | 0,07 | 0,1 | |
| Zn/PX/TMP/DHP/Cop | 0,2 | | 0,17 | 0,5 | 0,07 | | 0,03 |
| Zn/PX/TMP/DHP/Py/Cop | 0,2 | | 0,17 | 0,5 | 0,07 | 0,1 | 0,03 |

Gewichtsteile [GT]

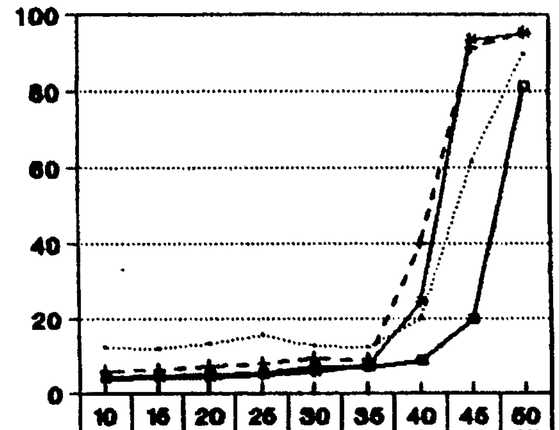


| Stabilisatoren | | 10 | 15 | 20 | 25 | 30 | 35 | 40 | 45 | 50 |
|---|---|---|---|---|---|---|---|---|---|---|
| Zn/Ca | ······ | 12 | 12 | 13 | 15 | 12 | 12 | 20 | 61 | 90 |
| Zn/PX | —+— | 6 | 6 | 7 | 8 | 9 | 9 | 40 | 91 | 95 |
| Zn/PX/TMP/DHP | —*— | 4 | 4 | 4 | 5 | 5 | 7 | 24 | 93 | 95 |
| Zn/PX/TMP/DHP/Py | —□— | 4 | 4 | 5 | 5 | 7 | 7 | 8 | 19 | 81 |

YI

thermische Belastung [min]

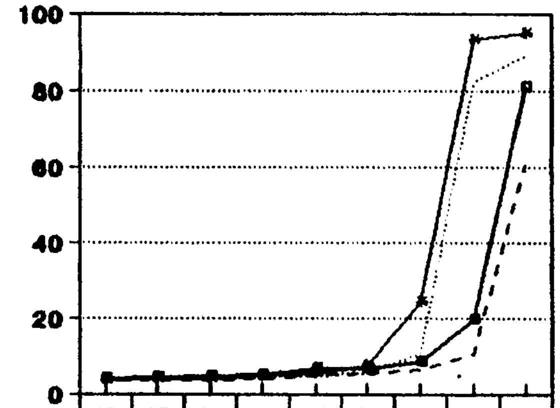


| Stabilisatoren | | 10 | 15 | 20 | 25 | 30 | 35 | 40 | 45 | 50 |
|---|---|---|---|---|---|---|---|---|---|---|
| Zn/PX/TMP/DHP | —*— | 4 | 4 | 4 | 5 | 5 | 7 | 24 | 93 | 95 |
| Zn/PX/TMP/DHP/Py | —□— | 4 | 4 | 5 | 5 | 7 | 7 | 8 | 19 | 81 |
| Zn/PX/TMP/DHP/CoP | ······ | 4 | 4 | 4 | 4 | 5 | 5 | 11 | 82 | 89 |
| Zn/PX/TMP/DHP/Py/CoP | - - | 4 | 4 | 4 | 4 | 5 | 5 | 6 | 10 | 61 |

YI

thermische Belastung [min]

**Rezeptur:**

**100 GT VESTOLIT S 7054**
**30 GT VESTINOL AH**
**0.3 GT Montanwachs**

| Stabilisatormischungen | Zn | Ca | PX | TMP | DHP | Py | Cop |
|---|---|---|---|---|---|---|---|
| Zn/Ca | 0,5 | 1 | | | | | |
| Zn/PX | 0,2 | | 0,2 | | | | |
| Zn/PX/TMP | 0,2 | | 0,2 | 0,5 | | | |
| Zn/PX/DHP | 0,2 | | 0,2 | | 0,07 | | |
| Zn/PX/TMP/DHP | 0,2 | | 0,2 | 0,5 | 0,07 | | |
| Zn/PX/TMP/DHP/Py | 0,2 | | 0,2 | 0,5 | 0,07 | 0,1 | |
| Zn/PX/TMP/DHP/Cop | 0,2 | | 0,17 | 0,5 | 0,07 | | 0,03 |
| Zn/PX/TMP/DHP/Py/Cop | 0,2 | | 0,17 | 0,5 | 0,07 | 0,1 | 0,03 |

Gewichtsteile [GT]

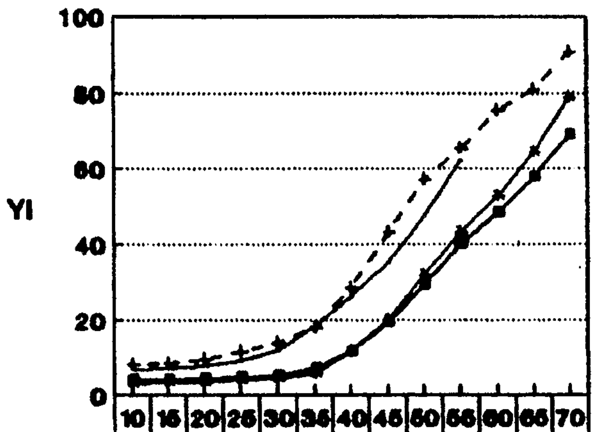


| Stabilisatoren | | 10 | 15 | 20 | 25 | 30 | 35 | 40 | 45 | 50 | 55 | 60 | 65 | 70 |
|---|---|---|---|---|---|---|---|---|---|---|---|---|---|---|
| ZnOct/CaBeh/Rhod | —— | 7 | 7 | 8 | 9 | 12 | 18 | 26 | 35 | 47 | 62 | - | - | - |
| Zn/PX | —+— | 8 | 8 | 9 | 11 | 14 | 18 | 28 | 43 | 57 | 65 | 76 | 81 | 91 |
| Zn/PX/TMP/DHP | —*— | 3 | 3 | 3 | 4 | 4 | 6 | 11 | 20 | 32 | 43 | 52 | 65 | 79 |
| Zn/PX/TMP/DHP/Py | —■— | 4 | 4 | 4 | 5 | 5 | 7 | 12 | 19 | 29 | 40 | 48 | 58 | 69 |

YI

thermische Belastung [min]

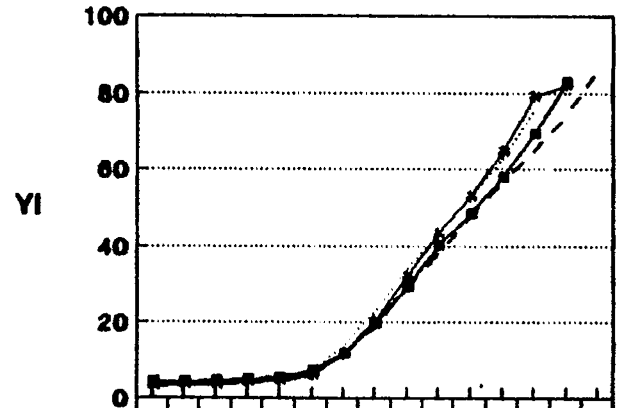


| Stabilisatoren | | 0 | 5 | 10 | 15 | 20 | 25 | 30 | 35 | 40 | 45 | 50 | 55 | 60 | 65 | 70 |
|---|---|---|---|---|---|---|---|---|---|---|---|---|---|---|---|---|
| Zn/PX/TMP/DHP | —*— | 3 | 3 | 3 | 4 | 4 | 6 | 11 | 20 | 32 | 43 | 52 | 65 | 79 | 82 | - |
| Zn/PX/TMP/DHP/Py | —■— | 4 | 4 | 4 | 5 | 5 | 7 | 12 | 19 | 29 | 40 | 48 | 58 | 69 | 83 | - |
| Zn/PX/TMP/DHP/Cop | ······ | 3 | 3 | 3 | 4 | 4 | 7 | 13 | 23 | 34 | 43 | 52 | 63 | 76 | - | - |
| Zn/PX/TMP/DHP/Py/Cop | - - - | 4 | 4 | 4 | 4 | 6 | 7 | 11 | 19 | 29 | 38 | 48 | 57 | 65 | 74 | 86 |

YI

thermische Belastung [min]

**Rezeptur:**

**100 GT VESTOLIT M 5867**
**5.0 GT Reoplast 39**

**(Vergleichsprobe: 0.075 GT ZnOct/0.35 GT CaBeh/0.3 GT Rhod)**

| Stabilisatormischungen | Zn | PX | TMP | DHP | Py | Cop |
|---|---|---|---|---|---|---|
| Zn/PX | 0,14 | 0,07 | | | | |
| Zn/PX/TMP | 0,14 | 0,07 | 0,6 | | | |
| Zn/PX/DHP | 0,14 | 0,07 | | 0,07 | | |
| Zn/PX/TMP/DHP | 0,14 | 0,07 | 0,6 | 0,07 | | |
| Zn/PX/TMP/DHP/Py | 0,14 | 0,07 | 0,6 | 0,07 | 0,1 | |
| Zn/PX/TMP/DHP/Cop | 0,14 | 0,06 | 0,6 | 0,07 | | 0,01 |
| Zn/PX/TMP/DHP/Py/Cop | 0,14 | 0,06 | 0,6 | 0,07 | 0,1 | 0,01 |

Gewichtsteile [GT]

Europäisches Patentamt

# EUROPÄISCHER RECHERCHENBERICHT

Nummer der Anmeldung

EP 90 11 4244

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-253985 (HULS AKTIENGESELLSCHAFT)<br>* Seite 7, Zeile 1 - Seite 11, Zeile 27; Ansprüche 1-6 *<br>--- | 1-3 | C08L27/06<br>C08K5/3415<br>C08K5/3432<br>C08K5/09<br>C08L77/12<br>//(C08L27/06, 77:12,79:02)<br>(C08L27/06, 79:02) |
| A | POLYMER BULLETIN.<br>vol. 21, no. 4, 01 April 1989, HEIDELBERG DE<br>Seiten 353 - 356; Y.CHUJO ET AL:<br>"SYNTHESIS OF AN AMPHIGEL BY THE TERPOLYMERIZATION OF 2-ALKYL-2-OXAZOLINE,2-ALKYL-2-OXAZOLINE, AND BIS OXAZOLINE."<br>--- | 1-3 | |
| A | EP-A-22087 (CIBA GEIGY AG)<br>* Seite 7, Zeilen 5 - 18 *<br>--- | 1-3 | |
| A | AU-A-4285578 (LABAZ)<br>* Seite 5, Zeile 11 - Seite 6, Zeile 10 *<br>----- | 1-3 | |

RECHERCHIERTE SACHGEBIETE (Int. Cl.5 )

C08L
C08K
C08G

Der vorliegende Recherchenbericht wurde für alle Patentansprüche erstellt

| Recherchenort | Abschlußdatum der Recherche | Prüfer |
|---|---|---|
| DEN HAAG | 10 DEZEMBER 1990 | WILSON A.J.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)